# EUROPÄISCHE PATENTSCHRIFT

(11) **EP 2 199 056 B1**
(45) Veröffentlichungstag und Bekanntmachung des Hinweises auf die Patenterteilung: **17.06.2015**
(21) Anmeldenummer: 09015303.2
(22) Anmeldetag: 10.12.2009
(51) Int. Cl.: B29C 45/66

(54) **Schließeinheit für eine Spritzgießmaschine**
Closing unit for an injection moulding machine
Unité de verrouillage pour une machine de moulage par injection

(30) Priorität: 16.12.2008 AT 19592008
(43) Veröffentlichungstag der Anmeldung: 23.06.2010
(73) Patentinhaber: ENGEL AUSTRIA GmbH, 4311 Schwertberg (AT)
(72) Erfinder: Schott, Günter, 4300 St. Valentin (AT); Aufreiter, Thomas, 4300 St. Valentin (AT); Zeidlhofer, Herbert, 3350 Haag (AT)
(74) Vertreter: Hofinger, Stephan

(56) Entgegenhaltungen:
- EP-A1- 1 005 971
- DE-A1-102006 016 200
- DE-A1-102006 016 343
- JP-A- 7 329 135
- US-A1- 2006 182 844

## Beschreibung

Die vorliegende Erfindung betrifft eine Schließeinheit für eine Spritzgießmaschine mit den Merkmalen des Oberbegriffs des Anspruchs 1.

Eine derartige Schließeinheit geht aus der EP 1 967 348 A1 hervor. Bei der dort gezeigten Schließeinheit wird die Spindelmutter über einen Riementrieb durch einen Elektromotor angetrieben. Nachteilig ist daran der große Platzbedarf.

Aufgabe der Erfindung ist es, eine gattungsgemäße Schließeinheit derart weiterzubilden, dass der Platzbedarf geringer ist.

Diese Aufgabe wird durch eine Schließeinheit mit den Merkmalen des Anspruchs 1 gelöst.

Neben der kompakten Bauweise hat die erfindungsgemäße Lösung den weiteren Vorteil, dass die vom Elektromotor erzeugte Antriebskraft zentral auf die Spindelmutter aufgebracht wird.

Weitere vorteilhafte Ausführungsformen der Erfindung sind in den abhängigen Ansprüchen definiert.

So kann beispielsweise vorgesehen sein, wenigstens zwei Eilhubvorrichtungen zu verwenden, deren Elektromotoren vorzugsweise an einer der beiden Formaufspannplatten angeordnet sind. Die Anordnung der Elektromotoren der wenigstens zwei Eilhubvorrichtungen kann beispielsweise in einander diagonal gegenüberliegenden Eckbereichen der Formaufspannplatte erfolgen. Alternativ kann vorgesehen sein, dass die Elektromotoren gemeinsam im unteren oder oberen Bereich der Formaufspannplatte angeordnet sind.

Besonders bevorzugt ist vorgesehen, dass die Schließeinheit als Zweiplatten-Schießeinheit ausgebildet ist, vorzugsweise mit wenigstens zwei Zugholmen, die an der einen Formaufspannplatte gelagert und mit der anderen Formaufspannplatte verriegelbar sind.

Weiters kann vorgesehen sein, dass zwischen den wenigstens zwei relativ zueinander verfahrbaren Formaufspannplatten ein Mitnehmer angeordnet ist, mit dem starr oder über einen Drehtisch eine Mittelplatte verbunden oder verbindbar ist. Im Falle einer starren Verbindung kann die Mittelplatte auch einstückig mit dem Mitnehmer ausgebildet sein. Zum Verschieben des Mitnehmers relativ zu wenigstens einer der Formaufspannplatten können eine Spindel und eine mit der Spindel im Eingriff stehende Spindelmutter vorgesehen sein. Besonders bevorzugt ist dann vorgesehen, dass ein die Spindelmutter antreibender Elektromotor als Hohlwellenmotor ausgebildet ist. Es ist aber grundsätzlich denkbar, den Mitnehmer über einen nicht als Hohlwellenmotor ausgebildeten Elektromotor oder überhaupt über ein anderes (nicht elektromotorisches) Antriebssystem anzutreiben.

Zur Abfederung wenigstens einer der Spindeln kann vorgesehen sein, diese über kegelförmige Tellerfedern an der Formaufspannplatte oder dem Mitnehmer abgefedert zu lagern.

Besonders bevorzugt ist vorgesehen, dass wenigstens eine der Formaufspannplatten von Holmen durchsetzt ist und die Spindel(n) von den Holmen, vorzugsweise von den Zugholmen, gesondert ausgebildet ist bzw. sind.

Schutz wird auch begehrt für eine Spritzgießmaschine mit einer Schließeinheit nach einer der vorstehend genannten Ausführungsformen.

Weitere Vorteile und Einzelheiten der Erfindung ergeben sich anhand der Figuren sowie der dazugehörigen Figurenbeschreibung. Dabei zeigen:
- Fig. 1: eine perspektivische Ansicht eines Ausführungsbeispiels einer erfindungsgemäßen Schließeinheit,
- Fig. 2: eine Draufsicht auf die bewegbare Formaufspannplatte der in Fig. 1 dargestellten Schließeinheit,
- Fig. 3: eine Seitenansicht zur Fig. 1, wobei für die Erfindung unwesentliche Elemente weggelassen wurden,
- Fig. 4: eine teilweise Schnittdarstellung entlang der Linie A - A der Fig. 2,
- Fig. 5a bis 5d: ein weiteres Ausführungsbeispiel der Erfindung in verschiedenen Ansichten mit einem verschiebbaren Mitnehmer und
- Fig. 6a, 6b: eine Möglichkeit der gefederten Lagerung wenigstens einer der Spindeln.

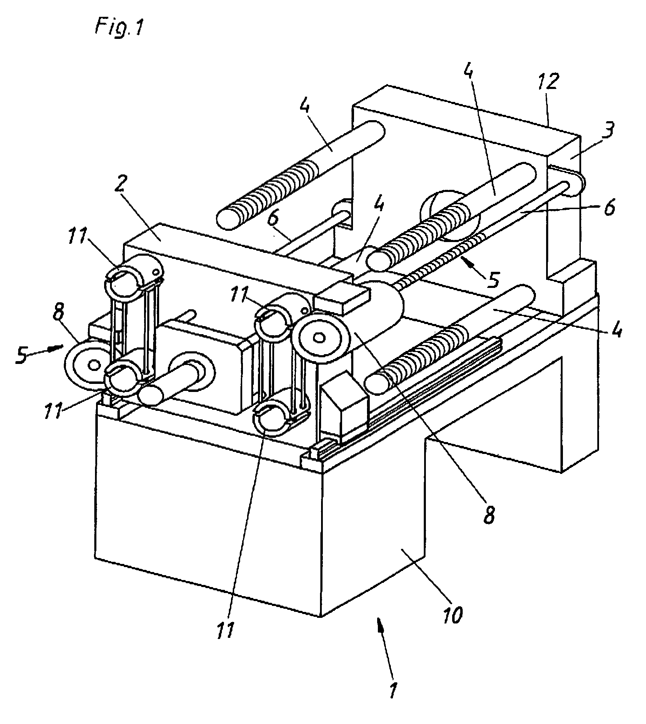

Fig. 1 zeigt schematisch in perspektivischer Darstellung eine als Zweiplatten-Schließeinheit ausgebildete Schließeinheit 1, bei welcher auf einem Maschinenbett 10 zwei Formaufspannplatten 2,3 angeordnet sind, die relativ zueinander durch zwei Eilhubvorrichtungen 5 verfahren werden können. Im gezeigten Ausführungsbeispiel ist die eine Formaufspannplatte 2 beweglich ausgebildet und kann auf dem Maschinenbett 10 entlang von Führungen bewegt werden. Die andere Formaufspannplatte 3 ist fest mit dem Maschinenbett 10 verbunden.

In diesem Ausführungsbeispiel sind vier Zugholme 4 in der feststehenden Formaufspannplatte 3 gelagert. Wird die bewegbare Formaufspannplatte 2 zur feststehenden Formaufspannplatte 3 hinbewegt, tauchen die Zugholme 4 in entsprechende Öffnungen der bewegbaren Formaufspannplatte 2 ein. Erkennbar sind in Fig. 1 vier Verriegelungsvorrichtungen 11, die dazu dienen, die Zugholme 4 mit der bewegbaren Formaufspannplatte 2 zu verriegeln, wenn sich die an den Formaufspannplatten 2, 3 aufgespannten Formhälften (in den Figuren nicht dargestellt) berühren. Anschließend erfolgt in an sich bekannter Weise der Schließkraftaufbau durch vier Druckkissen 12, von denen in Fig. 1 zwei erkennbar sind.

Nach Beendigung des Einspritzvorgangs und dem Erstarren des bzw. der gespritzten Formteile, können die Formhälften nach Entlastung der Druckkissen 12 und erfolgter Entriegelung der Zughofme 4 durch die Eilhubvorrichtungen 5 geöffnet werden.

Wie aus Fig. 1 hervorgeht, sind in diesem Ausführungsbeispiel die Elektromotoren 8 der Eilhubvorrichtungen 5 fest mit der bewegbaren Formaufspannplatte 2 verbunden und in deren Eckbereichen gelagert. Die Elektromotoren 8, welche erfindungsgemäß als Hohlwellenmotoren ausgebildet sind, treiben Spindelmuttern 7 an. Die entsprechenden Spindeln 6 sind fest mit der feststehenden Formaufspannplatte 3 verbunden. Durch eine Rotation der Spindelmuttern 7 auf den Spindeln 6 ergibt sich die Antriebskraft für die Verschiebung der bewegbaren Formaufspannplatte 2.

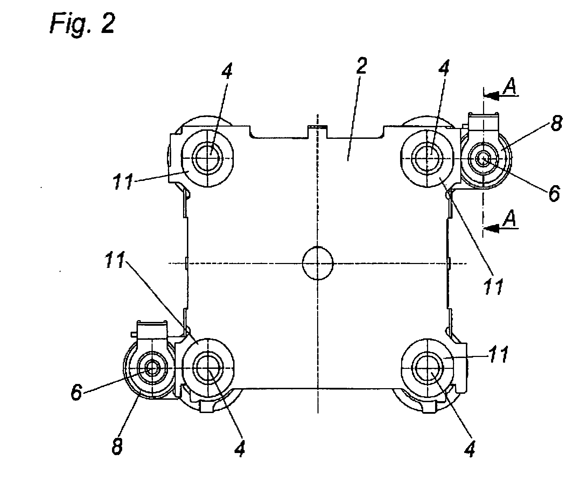

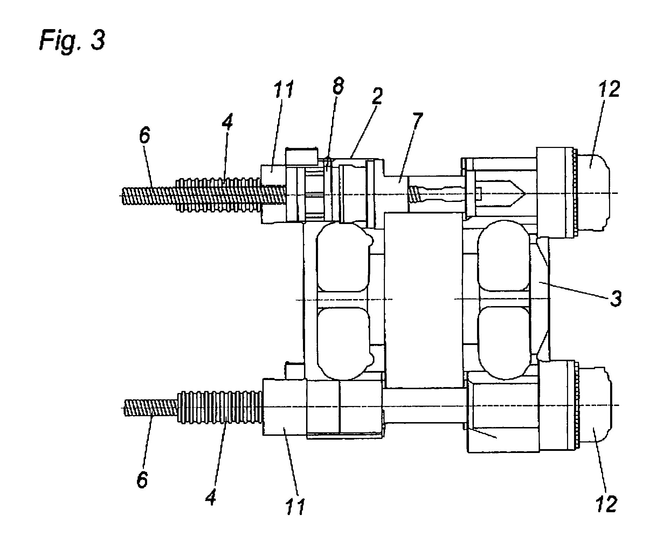

Die Anordnung der Elektromotoren 8 der Eilhubvorrichtungen 5 geht auch aus den Fig. 2 und 3 hervor.

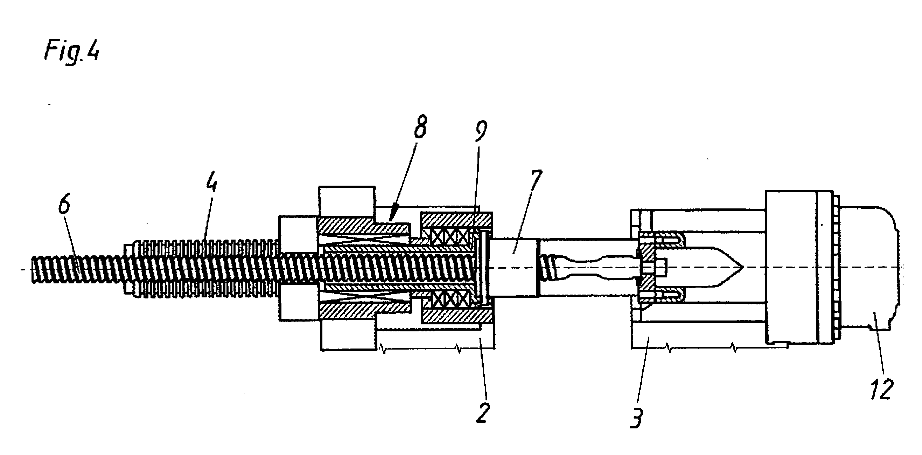

Von besonderem Interesse ist noch die Fig. 4, welche eine teilweise Schnittdarstellung entlang der Linie A - A der Fig. 2 zeigt. Erkennbar ist hier die Ausbildung des Elektromotors 8 als Hohlwellenmotor, wobei die Hohlwelle 9 drehfest mit der Spindelmutter 7 verbunden ist. Erkennbar ist auch, dass die Spindel 6 über Bolzen fest mit der feststehenden Formaufspannplatte 3 verbunden ist.

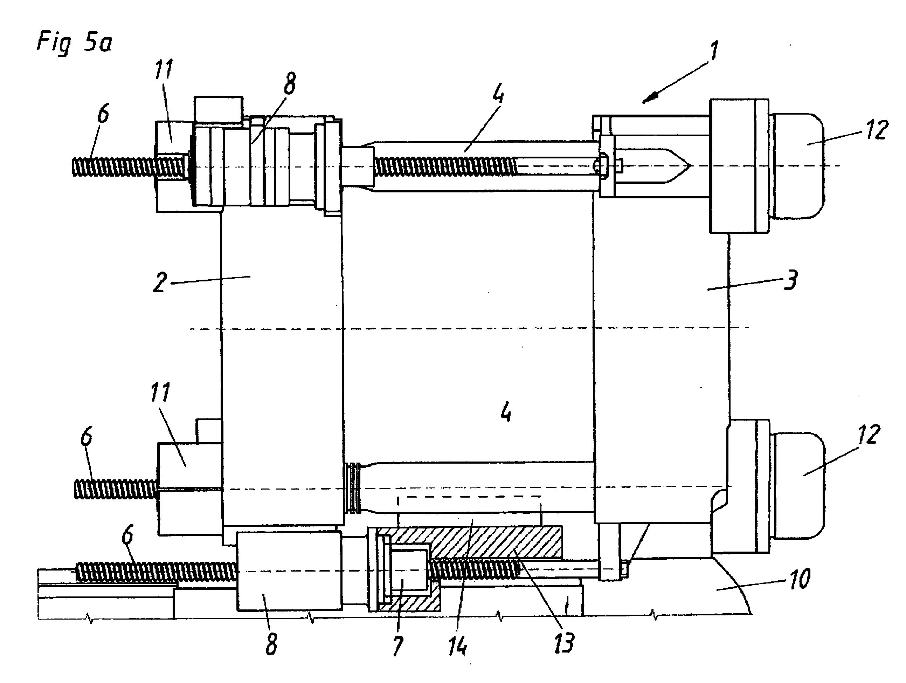

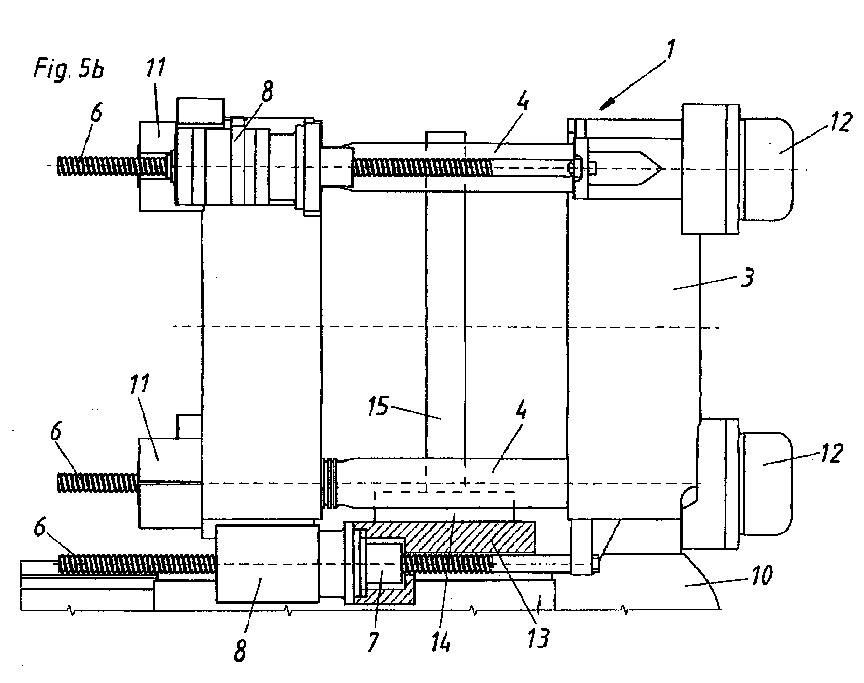

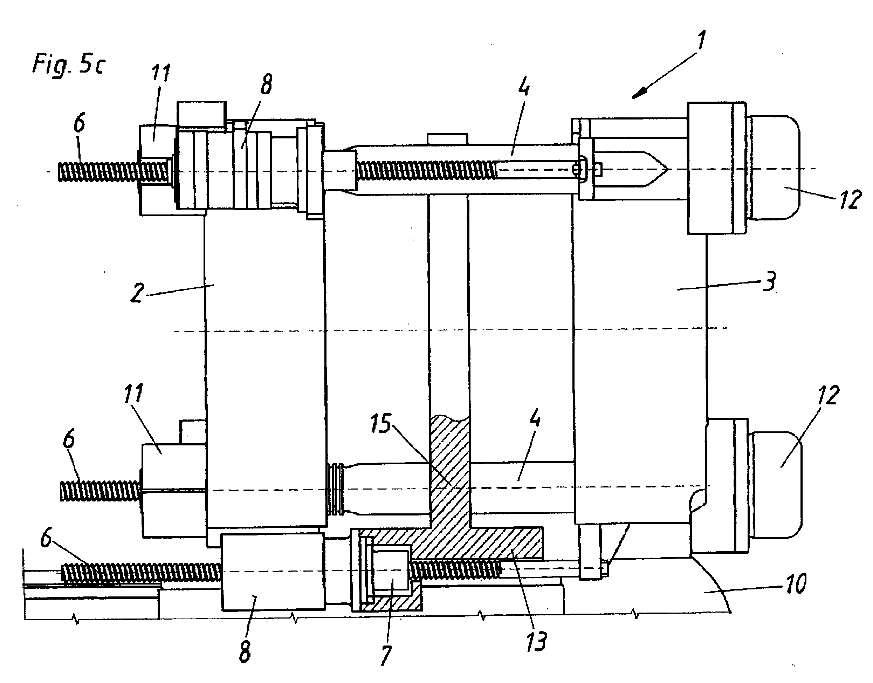

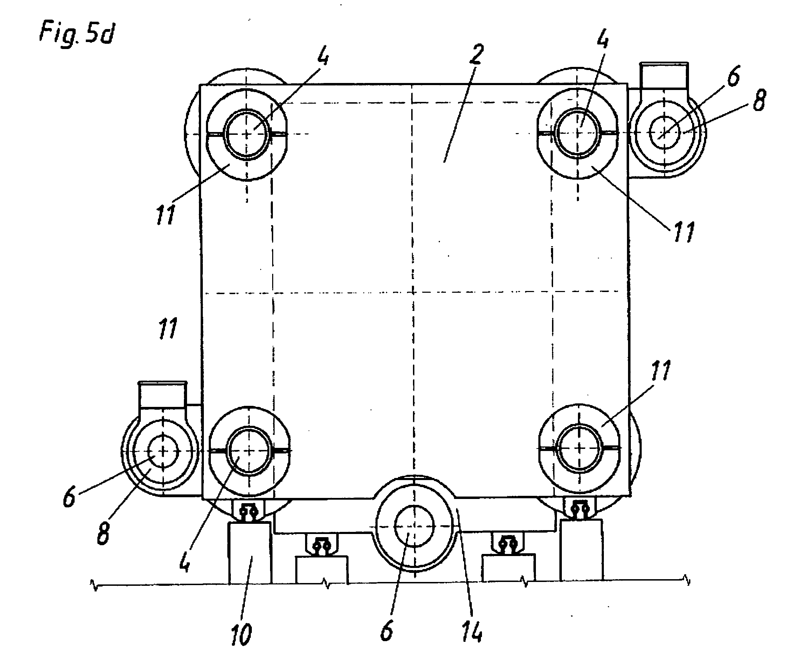

Das Ausführungsbeispiel der Fig. 5a bis 5d unterscheidet sich von jenem der Fig. 1 bis 4 nur durch die zusätzliche Anordnung eines Mitnehmers 13, welcher zwischen den Formaufspannplatten 2, 3 verschiebbar angeordnet ist. Am Mitnehmer 13 kann entweder ein Drehteller 14 angeordnet sein (Fig. 5a), auf welchem eine Mittelplatte 15 um eine vertikale Achse drehbar anordenbar ist (Fig. 5b). Es kann aber auch vorgesehen sein, die Mittelplatte 15 starr mit dem Mitnehmer 13 zu verbinden (Fig. 5c).

In allen Fällen kann vorgesehen sein, dass zum Verschieben des Mitnehmer 13 eine Eilhubvorrichtung mit einer Spindel 6 und einer durch einen Hohlwellenmotor antreibbaren Spindelmutter 7 zum Einsatz kommt und zwar in der gleichen Form wie bei den Eilhubvorrichtungen 5 für die bewegbare Formaufspannplatte 2. Dieser Fall ist in den Fig. 5a bis 5d dargestellt.

Alternativ könnte aber auch vorgesehen sein, dass die Spindelmutter 7 über einen nicht als Hohlwellenmotor ausgebildeten Elektromotor 8 oder über ein anderes Antriebsprinzip (zum Beispiel hydraulisch) angetrieben wird.

In den Fig. 5a bis 5d ist die Spindel 6 einerseits drehfest an der feststehenden Formaufspannplatte 3 gelagert und wirkt andererseits mit der Spindelmutter 7 zusammen, welche ihrerseits drehbar im Mitnehmer 13 angeordnet ist. Andere Anordnungsmöglichkeiten sind denkbar. Zum Beispiel kann auch vorgesehen sein, dass der Elektromotor 8 die Spindel antreibt, welche in diesem Fall drehend, aber axial feststehend gelagert sein müsste.

Selbstverständlich ist es auch denkbar, dass ein Drehteller 14 vorgesehen ist, welcher einer Drehung nicht um eine vertikale Achse, sondern um eine horizontale Achse gestattet. Auch ist es nicht unbedingt erforderlich, eine Mittelplatte 15 auf dem Drehteller 14 anzuordnen, sondern es kann vielmehr der Mitnehmer 13 an der Oberseite der Formaufspannplatten 2, 3 oder an einem gesonderten Rahmen abgestützt sein, sodass eine Mittelplatte 15 am Mitnehmer 13 herabhängend gelagert werden kann.

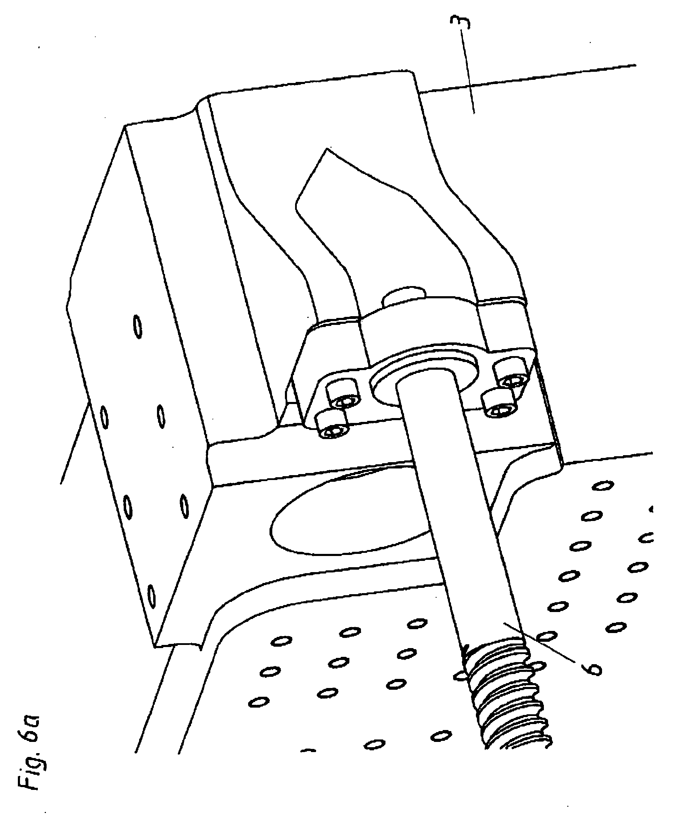

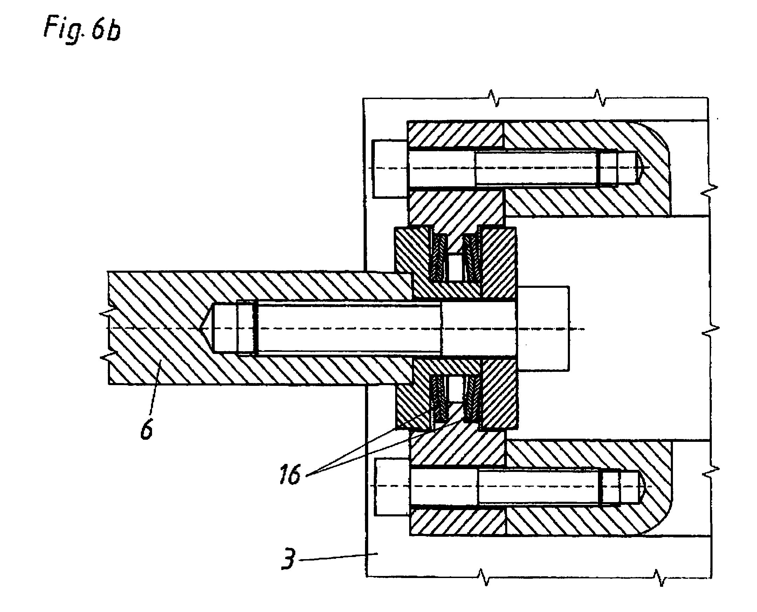

Die Fig. 6a und 6b zeigen eine Möglichkeit der abgefederten Lagerung wenigstens einer der Spindeln 6 (hier an der feststehenden Formaufspannplatte 3). Besonders vorteilhaft ist hier die Verwendung mehrerer Tellerfedern 16, welche kegelförmig ausgebildet sind.

## Patentansprüche

1. Zweiplatten-Schließeinheit (1) für eine Spritzgießmaschine, mit:
- einem Maschinenbett (10),
- zwei relativ zueinander verfahrbaren Formaufspannplatten (2, 3), von denen die eine Formaufspannplatte (2) entlang von Führungen auf dem Maschinenbett (10) verschiebbar ist und die andere Formaufspannplatte (3) fest mit dem Maschinenbett verbunden ist,
- wenigstens einer Eilhubvorrichtung (5) zum Verfahren der Formaufspannplatten (2, 3) relativ zueinander, die eine drehfest mit der einen Formaufspannplatte (3) verbundene Spindel (6) und eine mit der Spindel (6) im Eingriff stehende und drehbar mit der anderen Formaufspannplatte (2) verbundene Spindelmutter (7) aufweist,
- einem als Hohlwellenmotor ausgebildeten Elektromotor (8) zum Antreiben der Spindelmutter (7), wobei die Spindel (6) abschnittsweise in der Hohlwelle (8) verläuft,
- Holmen, die wenigstens eine der Formaufspannplatten (2, 3) durchsetzen, wobei die Spindel (6) von den Holmen gesondert ausgebildet ist,
**dadurch gekennzeichnet, dass** die Spindel (6) drehfest mit der fest mit dem Maschinenbett (10) verbundenen Formaufspannplatte (3) verbunden ist.

2. Schließeinheit nach Anspruch 1, **dadurch gekennzeichnet, dass** wenigstens zwei Eilhubvorrichtungen (5) vorgesehen sind, deren Elektromotoren (8) vorzugsweise an einer der beiden Formaufspannplatten (2, 3) angeordnet sind.

3. Schließeinheit nach Anspruch 2, **dadurch gekennzeichnet, dass** die Elektromotoren (8) der wenigstens zwei Eilhubvorrichtungen (5) in einander diagonal gegenüber liegenden Eckbereichen der Formaufspannplatte (2, 3) angeordnet sind.

4. Schließeinheit nach Anspruch 2, **dadurch gekennzeichnet, dass** die Elektromotoren (8) der wenigstens zwei Eilhubvorrichtungen (5) gemeinsam im unteren oder oberen Bereich der Formaufspannplatte (2, 3) angeordnet sind.

5. Schließeinheit nach einem der Ansprüche 1 bis 4, **dadurch gekennzeichnet, dass** wenigstens zwei Zugholme (4) vorgesehen sind, die an der einen Formaufspannplatte (3) gelagert und mit der anderen Formaufspannplatte (2) verriegelbar sind.

6. Schließeinheit nach einem der Ansprüche 1 bis 4, **dadurch gekennzeichnet, dass** zwischen den zwei relativ zueinander verfahrbaren Formaufspannplatten (2, 3) ein Mitnehmer (13) angeordnet ist, mit dem eine Mittelplatte (15) starr oder über einen Drehtisch (14) verbunden oder verbindbar ist.

7. Schließeinheit nach Anspruch 6, **dadurch gekennzeichnet, dass** der Mitnehmer (13) über eine Spindel (6) und eine mit der Spindel (6) im Eingriff stehende Spindelmutter (7) relativ zu wenigstens einer der Formaufspannplatten (2, 3) verschiebbar ist.

8. Schließeinheit nach Anspruch 7, **dadurch gekennzeichnet, dass** ein die Spindelmutter (7) antreibender Elektromotor (8) vorgesehen ist, welcher als Hohlwellenmotor ausgebildet ist.

9. Schließeinheit nach einem der Ansprüche 1 bis 8, **dadurch gekennzeichnet, dass** wenigstens eine der Spindeln (6) über Tellerfedern (16) an der Formaufspannplatte (3) oder dem Mitnehmer (13) gelagert ist.

10. Spritzgießmaschine mit einer Schließeinheit (1) nach einem der Ansprüche 1 bis 9.

## Claims

1. A two-plate closing unit (1) for an injection moulding machine comprising:
- a machine bed (10),
- two mould mounting plates (2, 3) which are moveable relative to each other and of which the one mould mounting plate (2) is displaceable along guides on the machine bed (10) and the other mould mounting plate (3) is fixedly connected to the machine bed,
- at least one fast-stroke device (5) for displacement of the mould mounting plates (2, 3) relative to each other, which has a spindle (6) non-rotatably connected to the one mould mounting plate (3) and a spindle nut (7) which is in engagement with the spindle (6) and is connected rotatably to the other mould mounting plate (2),
- an electric motor (8) in the form of a hollow-shaft motor for driving the spindle nut (7), wherein the spindle (6) extends portion-wise in the hollow shaft (8), and
- rods which pass through at least one of the mould mounting plates (2, 3), wherein the spindle (6) is separate from the rods,
**characterised in that** the spindle (6) is non-rotatably connected to the mould mounting plate (3) fixedly connected to the machine bed (10).

2. A closing unit according to claim 1 **characterised in that** there are provided at least two fast-stroke devices (5) whose electric motors (8) are preferably arranged at one of the two mould mounting plates (2, 3).

3. A closing unit according to claim 2 **characterised in that** the electric motors (8) of the at least two fast-stroke devices (5) are arranged in mutually diagonally opposite corner regions of the mould mounting plate (2, 3).

4. A closing unit according to claim 2 **characterised in that** the electric motors (8) of the at least two fast-stroke devices (5) are arranged jointly in the lower or upper region of the mould mounting plate (2, 3).

5. A closing unit according to one of claims 1 to 4 **characterised in that** there are provided at least two tie rods (4) which are mounted to the one mould mounting plate (3) and are lockable to the other mould mounting plate (2).

6. A closing unit according to one of claims 1 to 4 **characterised in that** arranged between the two mould mounting plates (2, 3) which are displaceable relative to each other is an entrainment member (13) to which a central plate (15) is or can be connected rigidly or by way of a turntable (14).

7. A closing unit according to claim 6 **characterised in that** the entrainment member (13) is displaceable relative to at least one of the mould mounting plates (2, 3) by way of a spindle (6) and a spindle nut (7) in engagement with the spindle (6).

8. A closing unit according to claim 7 **characterised in that** there is provided an electric motor (8) which drives the spindle nut (7) and which is in the form of a hollow-shaft motor.

9. A closing unit according to one of claims 1 to 8 **characterised in that** at least one of the spindles (6) is mounted to the mould mounting plate (3) or the entrainment member (13) by way of plate springs (16).

10. An injection moulding machine having a closing unit (1) according to one of claims 1 to 9.

## Revendications

1. Unité de fermeture à deux panneaux (1) pour une machine de moulage par injection, comprenant :
- un banc de machine (10),
- deux panneaux porte-moule (2, 3) pouvant être déplacés l'un par rapport à l'autre, dont un panneau porte-moule (2) peut être déplacé par coulissement le long de guidages sur le banc de machine (10) et l'autre panneau porte-moule (3) est relié de manière solidaire au banc de machine,
- au moins un dispositif de course rapide (5) servant à déplacer les panneaux porte-moule (2, 3) l'un par rapport à l'autre, lequel dispositif de course rapide présente une broche (6) reliée de manière solidaire en rotation à un panneau porte-moule (3) et un écrou de broche (7) se trouvant en prise avec la broche (6) et relié de manière à pouvoir tourner à l'autre panneau porte-moule (2),
- un moteur électrique (8) réalisé sous la forme d'un moteur à arbre creux, servant à entraîner l'écrou de broche (7), la broche (6) s'étendant par endroits dans l'arbre creux (8),
- des montants, qui traversent au moins un des panneaux porte-moule (2, 3), la broche (6) étant réalisée de manière isolée des montants,
**caractérisée en ce que** la broche (6) est reliée de manière solidaire en rotation au panneau porte-moule (3) relié de manière solidaire au banc de machine (10).

2. Unité de fermeture selon la revendication 1, **caractérisée en ce qu'**au moins deux dispositifs de course rapide (5) sont prévus, dont les moteurs électriques (8) sont disposés de préférence à l'un des deux panneaux porte-moule (2, 3).

3. Unité de fermeture selon la revendication 2, **caractérisée en ce que** les moteurs électriques (8) des deux dispositifs de course rapide (5) ou plus sont disposés dans des zones d'angle, opposées les unes aux autres de manière diagonale, du panneau porte-moule (2, 3).

4. Unité de fermeture selon la revendication 2, **caractérisée en ce que** les moteurs électriques (8) des deux dispositifs de course rapide (5) ou plus sont disposés ensemble dans la zone inférieure ou dans la zone supérieure du panneau porte-moule (2,3).

5. Unité de fermeture selon l'une quelconque des revendications 1 à 4, **caractérisée en ce qu'**au moins deux montants de traction (4) sont prévus, lesquels sont montés à un des panneaux porte-moule (3) et peuvent être verrouillés à l'autre panneau porte-moule (2).

6. Unité de fermeture selon l'une quelconque des revendications 1 à 4, **caractérisée en ce qu'**est disposé, entre les deux panneaux porte-moule (2, 3) pouvant être déplacés l'un par rapport à l'autre, un entraîneur (13), auquel un panneau central (15) est relié ou peut être relié de manière rigide ou par l'intermédiaire d'un plateau rotatif (14).

7. Unité de fermeture selon la revendication 6, **caractérisée en ce que** l'entraîneur (13) peut être déplacé par coulissement par rapport à au moins un des panneaux porte-moule (2, 3) par l'intermédiaire d'une broche (6) et d'un écrou de broche (7) se trouvant en prise avec la broche (6).

8. Unité de fermeture selon la revendication 7, **caractérisée en ce qu'**un moteur électrique (8) entraînant l'écrou de broche (7) est prévu, lequel est réalisé sous la forme d'un moteur à arbre creux.

9. Unité de fermeture selon l'une quelconque des revendications 1 à 8, **caractérisée en ce qu'**au moins une des broches (6) est montée au panneau porte-moule (3) ou à l'entraîneur (13) par l'intermédiaire de ressorts à coupelle (16).

10. Machine de moulage par injection comprenant une unité de fermeture (1) selon l'une quelconque des revendications 1 à 9.
